# FASCICULE DE BREVET EUROPEEN

(11) **EP 0 338 477 B1**
(45) Date de publication et mention de la délivrance du brevet: **27.01.1993**
(21) Numéro de dépôt: 89106830.6
(22) Date de dépôt: 17.04.1989
(51) Int. Cl.: H02G 15/14

(54) **Boîtier pour équipment submersible**
Gehäuse für Unterwassereinrichtung
Housing for submersible equipment

(30) Priorité: 21.04.1988 FR 8805297
(43) Date de publication de la demande: 25.10.1989
(73) Titulaire: ALCATEL CIT, 75008 Paris (FR)
(72) Inventeur: Pelet, André, F-78310 Maurepas (FR); Cachot, Jacques, F-91240 Saint Michel Sur Orge (FR)
(74) Mandataire: Weinmiller, Jürgen

(56) Documents cités:
- FR-A- 2 596 231
- GB-A- 2 139 859

## Description

L'invention a pour objet un boîtier pour équipement submersible comportant des circuits électriques dont le fonctionnement s'accompagne d'un échauffement qu'il faut dissiper hors du boîtier, elle concerne particulièrement les boîtiers des répéteurs des câbles sous-marins de transmission.

Pour pouvoir être immergés, éventuellement à grande profondeur, de tels équipements électriques ont leurs circuits enfermés dans des boîtiers étanches, conçus pour résister aux fortes pressions externes sans grande déformation ; tels sont notamment les boîtiers enfermant les circuits électroniques et/ou électro-optiques des répéteurs.

Le fonctionnement des équipements alimentés électriquement s'accompagne d'une production de chaleur qui fait monter la température à l'intérieur des boîtiers. Si la quantité de chaleur produite en fonctionnement est importante, il devient nécessaire de prévoir des moyens de dissipation thermique permettant d'éviter l'échauffement excessif des constituants de l'équipement qui sont enclos dans le boîtier.

Un boîtier doté de tels moyens est par exemple décrit dans le brevet français FR-A-2546009, il comporte une enveloppe tubulaire rigide, métallique, bonne conductrice de la chaleur, agençée et dimensionnée pour pouvoir supporter de fortes pressions externes et pour contenir intérieurement les circuits composant un répéteur.

Les circuits y sont répartis dans des bâtis en forme de secteurs de cylindre a cent vingt degrés, qui s'assemblent en un cylindre venant se placer à l'intérieur de l'enveloppe tubulaire. Le diamètre intérieur de cette dernière est légèrement plus grand que celui du cylindre formé par les bâtis assemblés, afin de tenir compte des déformations susceptibles d'être causées par la pression due à l'immersion.

Les bâtis sont écartés l'un de l'autre par l'action de ressorts intercalaires, ce qui les repousse indirectement contre la paroi interne de l'enveloppe tubulaire.

Cet agencement a pour inconvénient d'utiliser, pour la transmission de la chaleur au travers de l'enveloppe tubulaire, des surfaces de contact entre surfaces profilées des bâtis et de l'enveloppe qui doivent s'adapter parfaitement les unes aux autres, alors que l'enveloppe est susceptible de se déformer sous la pression du fluide où le boîtier est immergé, en cas d'immersion profonde.

Ceci est agravé par le fait que le système à ressorts intercalaires n'assure pas nécessairement une répartition uniforme des jeux et conduit parfois à des désalignements.

De plus pour pouvoir être accessibles, les circuits producteurs de chaleur sont montés dans des cavités s'ouvrant vers l'extérieur du cylindre délimité par les bâtis assemblés, ce qui limite les surfaces de contact, entre ces bâtis et la paroi interne de l'enveloppe tubulaire, aux zones situées en bordure de ces cavités.

L'invention propose donc un boîtier, de type tubulaire, à forte capacité de refroidissement, peu sensible aux variations de pression, simple de conception et de montage, pour équipement submersible incorporant des circuits électriques dont le fonctionnement s'accompagne d'un fort échauffement que l'on dissipe à l'extérieur au travers de l'enveloppe tubulaire du boîtier.

Le boîtier comporte une enveloppe tubulaire rigide, thermiquement conductrice, fermée de manière étanche à ses extrémités ; des circuits électriques y sont logés dans des réceptacles rigides et thermiquement conducteurs qui sont plaqués contre la paroi interne de l'enveloppe tubulaire par des ressorts, de manière à permettre une dissipation de la chaleur, produite par les circuits, à l'extérieur du boîtier et par l'intermédiaire des réceptacles.

Selon une caractéristique de l'invention, le boîtier comporte des ressorts, de type annulaire fendu, transversalement disposés dans l'enveloppe tubulaire, individuellement entourés et maintenus comprimés chacun par tous ces réceptacles dans l'enveloppe tubulaire.

L'invention, ses caractéristiques et ses avantages sont précisés dans la description qui suit, en liaison avec les figures répertoriées ci-dessous :
- La figure 1 présente une vue éclatée partielle d'un boîtier pour équipement électrique submersible ;
- La figure 2 présente une vue en bout et en demi-coupe médiane du boîtier de la figure 1, assemblé ;
- La figure 3 présente une coupe longitudinale partielle du boîtier de la figure 1, assemblé ;
- La figure 4 présente une vue en bout et en demi-coupe médiane d'une variante de boîtier.

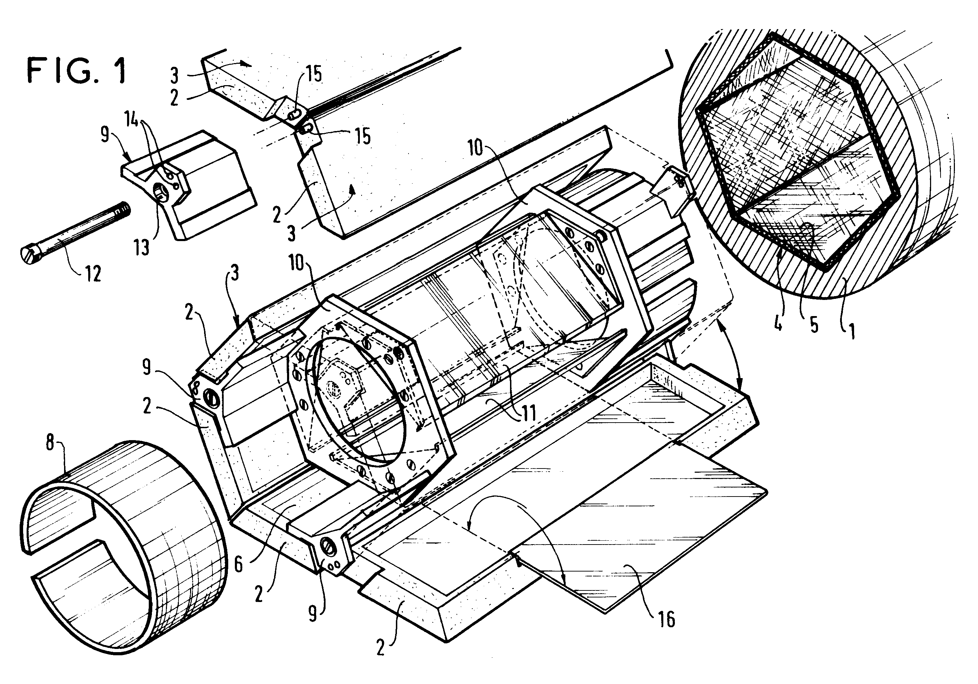

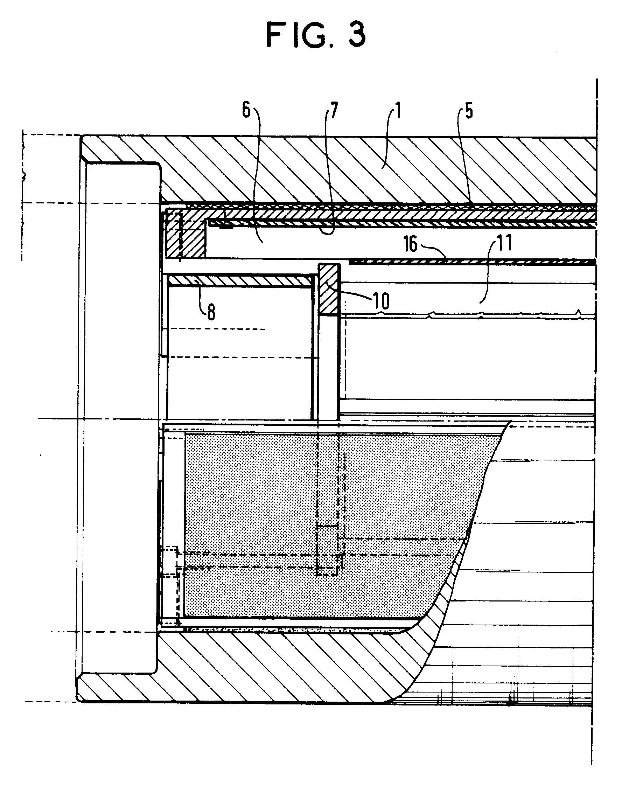

Le boîtier montré sur les figures 1 à 3 est destiné à loger un équipement submersible comportant des circuits électriques dont l'échauffement nécessite la mise en place de moyens de dissipation de la chaleur vers l'extérieur du boîtier.

Dans un exemple classique de réalisation, l'équipement submersible est un répéteur pour câble sous-marin de transmission, dont les circuits électroniques et/ou électro-optiques viennent se loger dans une enveloppe tubulaire 1. Cette dernière est conçue pour être fermée à ses extrémités de manière étanche par deux cloisons munies de traversées étanches pour câble sous-marin de transmission, les cloisons, leurs traversées et le câble n'étant pas représentés ici.

L'enveloppe tubulaire 1 d'allure cylindrique est constituée en un matériau rigide et bon conducteur thermique, elle est dimensionnée pour peu fléchir sous l'effet des éventuelles fortes pressions externes auxquelles elle peut-être soumise en cas d'immersion profonde du boîtier qui la comporte.

L'enveloppe tubulaire 1 est par exemple constituée par un tube d'acier à section transversale circulaire éventuellement recouvert intérieurement et/ou extérieurement d'une couche électriquement isolante, par exemple en polyéthylène, permettant suivant le cas d'isoler tout ou partie du contenu du tube par rapport à ce tube et/ou le tube et son contenu par rapport au milieu d'immersion.

La partie d'équipement à loger dans l'enveloppe tubulaire 1, qui est constituée par l'ensemble des circuits électroniques et/ou électro-optiques dans le cas d'un répéteur, est classiquement répartie dans le volume disponible à l'intérieur de cette enveloppe tubulaire.

Les circuits comportant des composants à fort échauffement en fonctionnement sont disposés à proximité de la paroi interne de l'enveloppe.

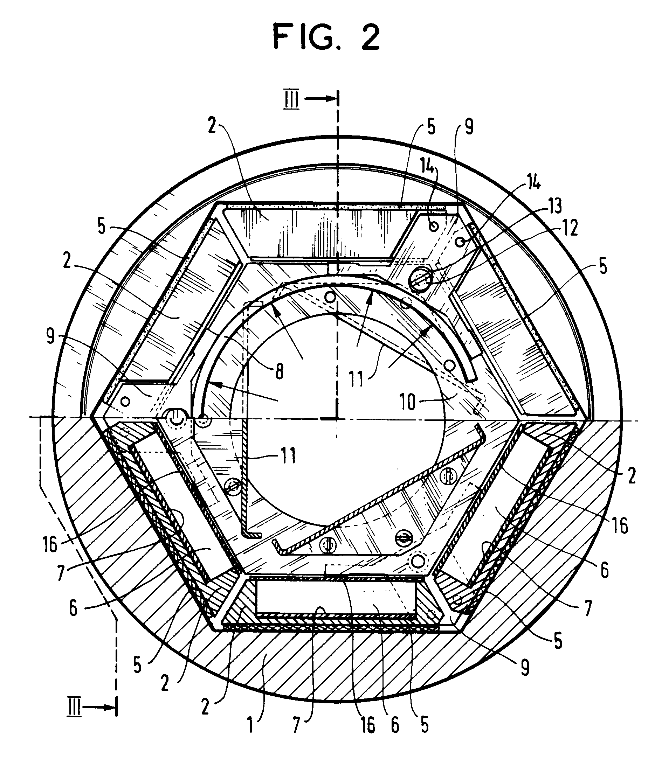

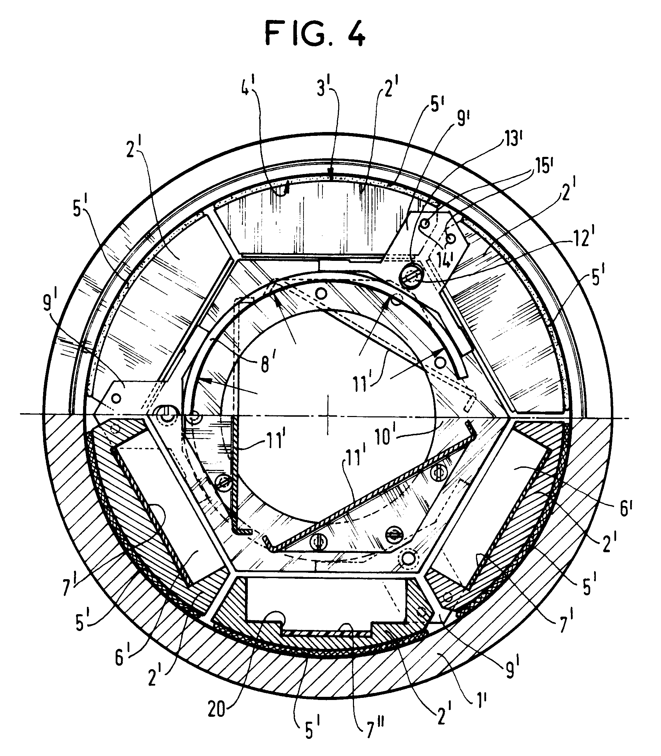

A cet effet, ces circuits à composants fortement chauffants, non représentés pour ne pas surcharger les figures, sont disposés dans des réceptacles 2, réalisés en matériau rigide bon conducteur thermique et conformés de manière à venir pratiquement épouser la paroi interne de l'enveloppe tubulaire. Ces réceptacles 2, tels que présentés sur les figures 1 et 2 ont chacun une grande surface extérieure plane 3 de dimensions légèrement inférieures à celle de la facette plane 4 de paroi interne d'enveloppe tubulaire 1 contre laquelle elle vient se presser. De même les réceptacles 2′ de la variante présentée en figure 4, ont chacun une grande surface extérieure bombée 3′ complémentaire d'un secteur de paroi interne cylindrique 4′ de l'enveloppe tubulaire contre lequel elle vient se presser.

Dans une forme préférée de réalisation, on insère un mince matelas métallique 5 ou 5′ entre chaque grande surface extérieure 3 ou 3′ de réceptacle 2 ou 2′ et la paroi interne 4 ou 4′ d'enveloppe tubulaire 1 ou 1′ contre laquelle cette grande surface vient se presser.

Chaque matelas métallique 5 ou 5′ est ici constitué d'une fine enveloppe métallique tissée qui entoure un tricot métallique élastique, l'un et l'autre bons conducteurs thermiques.

Chaque réceptacle 2 ou 2′ d'allure au moins grossièrement parallélépipédique rectangle est réalisé en matériau bon conducteur thermique et comporte au moins une cavité 6 ou 6′ de logement de circuit dont le fond s'étend à proximité de la grande surface 3 ou 3′ du réceptacle à l'intérieur de ce dernier. Dans les exemples de réalisation présentés, les cavités, d'allure parallélépipédique rectangle, s'étendent sur la plus grande partie des boîtiers, de manière à pouvoir recevoir des plaques de circuit de grandes dimensions.

Dans la réalisation envisagée sur les figures 1 à 3, le fond de la cavité 6 de chaque réceptacle 2 s'étend parallèlement à la grande surface extérieure plane 3 du réceptacle à proximité de cette dernière, de manière à permettre le positionnement d'une plaque de circuit dans la cavité parallèlement au fond et par conséquent à proximité de la paroi interne de l'enveloppe tubulaire 1 contre laquelle est pressée la grande surface extérieure plane 3 qu'elle jouxte. Il est donc possible d'obtenir un très bon refroidissement des circuits électriques générateurs de chaleur en disposant ces derniers sur une plaque telle que 7 disposée en fond de cavité 6, celle-ci étant en mesure de transmettre la chaleur produite vers l'enveloppe-tubulaire 1 par toute la grande surface extérieure plane 3 du réceptacle, au travers du matelas métallique 5.

De façon analogue, dans la réalisation envisagée sur la figure 4, le fond de chaque cavité de réceptacle 2 s'étend à proximité de la grande surface extérieure bombée 3′ du réceptacle de manière, également, à permettre un très bon refroidissement des circuits électriques générateurs de chaleur en disposant ces derniers sur une plaque telle que 7′ ou 7˝ logée en fond de cavité.

On notera que la réalisation envisagée sur la figure 4, permet d'obtenir des cavités plus profondes pour un même diamètre externe d'enveloppe tubulaire et par conséquent de loger des composants de plus grande hauteur, si besoin est. Ainsi, on a illustré sur cette figure 4 deux types de fond de cavité, l'un, destiné à recevoir une plaque support de circuit telle que 7′, analogue à celui des cavités 6 présentées sur les figures 1 à 3 et l'autre, destiné à recevoir une plaque support de circuit plus étroite telle que 7˝, le fond présentant alors un décrochement tel que 20 donnant à la cavité une plus grande profondeur.

Dans les formes de réalisation présentées sur les figures 1 à 3 et sur la figure 4, il est possible d'utiliser au maximum la surface de la paroi interne de l'enveloppe tubulaire 1 ou 1′ par un choix judicieux du nombre de réceptacles et de la taille des grandes surfaces extérieures 3 ou 3′ de ces réceptacles en fonction des besoins.

Pour assurer une bonne conduction thermique entre réceptacles 2 ou 2′ et enveloppe tubulaire 1 ou 1′ au travers des matelas 5 ou 5′, il est nécessaire de plaquer les réceptacles contre les matelas et ces derniers contre l'enveloppe tubulaire.

Ceci est obtenu par l'intermédiaire de deux ressorts annulaires 8 ou 8′ transversalement fendus que l'on vient comprimer entre des supports 9 ou 9′ sur lesquels sont assujettis les réceptacles 2 ou 2′ aux extrémités de l'enveloppe tubulaire 1 ou 1′.

Chaque ressort annulaire est constitué par une large bande, en matériau élastique préférablement isolant, qui est enroulée, et peut être comprimé par un ensemble de forces centripètes, tant que la fente transversale qu'il comporte reste ouverte ; il vient se loger entre des supports 9 ou 9′ également répartis à sa périphérie, soit, par ressort, trois supports disposés à cent vingt degrés par ressort dans les exemples de réalisation présentés.

Chacun des supports 9 ou 9′ destinés à se plaquer contre la paroi externe d'un même ressort annulaire est ici latéralement fixé sur un flasque de positionnement 10 ou 10′ destiné à venir se placer transversalement dans l'enveloppe tubulaire 1 ou 1′ dans le volume intérieur délimité par les réceptacles 2 ou 2′. Les flasques de positionnement 10 ou 10′ d'un même boîtier sont immobilisés entre eux par des entretoises 11 ou 11′, ils sont au nombre de deux dans les réalisations présentées et ils pourraient éventuellement être plus nombreux dans le cas de boîtiers longs susceptibles, autrement, de fléchir dans leur zone centrale, en immersion profonde.

Les entretoises 11 ou 11′ solidarisent les flasques 10 ou 10′ entre eux ainsi que, par leur intermédiaire, les supports 9 ou 9′ et les réceptacles 2 ou 2′ de manière que soit formé un ensemble susceptible d'être introduit dans l'enveloppe tubulaire 1 ou 1′ correspondante ou sorti de cette dernière en un seul bloc. Les entretoises 11 ou 11′ servent éventuellement de support à des composants et circuits, non figurés, ne dissipant que peu ou pas de chaleur en fonctionnement.

Les supports 9 ou 9′ assujettis d'un même côté d'un même flasque 10 ou 10′ pour prendre appui sur un même ressort annulaire 8 ou 8′, sont montés de manière à transmettre aux réceptacles 2 ou 2′ qu'ils portent les pressions centrifuges qu'exerce ce ressort, lorsqu' il est en place. A cet effet chacun de ces supports dispose d'une liberté limitée lui permettant de se déplacer parallèlement au flasque et par conséquent transversalement dans l'enveloppe tubulaire où l'on vient le monter.

Dans les exemples de réalisation proposés, chaque réceptacle 2 ou 2′ est monté partiellement rotatif entre deux supports 9 ou 9′ alignés qui sont fixés chacun sur un flasque 10 ou 10′ différent et qui maintiennent ce réceptacle par l'un de ses bords longitudinaux.

Les deux supports affectés à un réceptacle desservent aussi un second réceptacle disposé à côté du premier et parallèlement à la longueur de celui-ci, ils permettent de positionner individuellement et/ou conjointement les deux réceptacles soit en une position rabattue pour laquelle les réceptacles sont aptes à pénétrer dans l'enveloppe tubulaire 1 ou 1′ avec leurs grandes faces extérieures, planes ou bombées selon la réalisation considérée, en regard de la paroi interne de cette enveloppe tubulaire, soit en une position ouverte, uniquement possible hors de l'enveloppe tubulaire, pour laquelle la cavité 6 ou 6′ du réceptacle est directement accessible, comme on le voit sur le réceptacle 2 représenté en bas sur la figure 1.

Dans les réalisations proposées, chaque support 9 ou 9′ est composé d'un dièdre apte à se plaquer contre la paroi externe d'un ressort annulaire par ses parois internes et à servir de portée de fin de rotation, à chacun des deux réceptacles qu'il porte, par l'une de ses deux parois externes.

Ainsi que visible plus en détail pour l'un des supports 9 en haut sur la figure 1, chaque support 9 ou 9′ est fixé au flasque qui le porte par l'intermédiaire d'une tige 12 ou 12′ passant dans un conduit 13 ou 13′ ménagé parallèlement à l'arête du dièdre qu'il comporte ; la tige 12 ou 12′ immobilise, en translation selon son axe, le support 9 ou 9′ coincé entre sa tête en saillie et le flasque où cette tige 12 ou 12′ se fixe perpendiculairement par exemple par vissage.

Un jeu, ménagé entre conduit 13 ou 13′ et tige 12 ou 12′, permet par contre des déplacements du support transversalement à la tige 12 ou 12′. Dans une forme de réalisation le conduit a une section légèrement oblongue orientée selon un plan médian passant par l'arête du dièdre, ce qui autorise les déplacements radiaux du support 9 ou 9′ par rapport à l'axe de l'enveloppe tubulaire 1 ou 1′ où il vient se loger.

L'articulation de deux réceptacles 2 ou 2′ sur un support 9 ou 9′ s'effectue par l'intermédiaire d'un organe d'articulation ici constitué par une patte d'extrémité, perpendiculaire à l'arête du dièdre ; cette patte est située à l'extérieur de ce dièdre et à l'autre extrémité du support par rapport au flasque. Chaque patte d'extrémité comporte deux articulations de réceptacles disposées symétriquement par rapport au plan médian évoqué ci-dessus et ici constituées par deux trous 14 ou 14′ parallèles de logement pour l'une des extrémités 15 ou 15′ d'un axe de rotation de chacun des deux réceptacles 2 ou 2′ portés par le support 9 ou 9′ considéré.

Chaque réceptacle 2 ou 2′ est monté rotatif sur deux supports 9 ou 9′ alignés, montés sur deux flasques différents, les deux extrémités 15 ou 15′ de son axe de rotation étant positionnées chacune dans l'un des deux trous 14 ou 14′ alignés des supports.

Six réceptacles 2 ou 2′ montés sur trois paires de support 9 ou 9′ sont prévus sur les réalisations ici proposées, leurs grandes faces externes planes 3 ou bombées 3′ déterminent un solide octogonal ou un cylindre apte à pénétrer dans l'enveloppe tubulaire 1 ou 1′ correspondante lorsque les réceptacles sont en position rabattue en appui par leurs faces internes sur les parois externes des dièdres que forment les supports 9 ou 9′.

La rotation des réceptacles 2 ou 2′, lorsque l'ensemble monté est hors de son enveloppe tubulaire, permet d'accéder aux circuits placés dans leurs cavités qui sont autrement inaccessibles.

Les flasques 10 ou 10′, leurs entretoises 11 ou 11′, les supports 9 ou 9′ et les réceptacles 2 ou 2′ équipés de leurs circuits sont réunis en un ensemble par simple assemblage mécanique avant leur positionnement dans l'enveloppe tubulaire correspondante 1 ou 1′. Cet ensemble est simplement introduit par une extrémité dans l'enveloppe tubulaire concerné, les réceptacles ayant préalablement été placés dans la position rabattue qu'ils occuperont dans cette enveloppe.

L'introduction des ressorts annulaires 8 ou 8 ′ entre les supports 9 ou 9′ s'effectue par les extrémités de l'enveloppe tubulaire dans laquelle a préablement été positionné l'ensemble évoqué ci-dessus, cette introduction implique une compression préalable des ressorts. Les ressorts, une fois mis en place, assurent le plaquage des réceptacles 2 ou 2′ contre les matelas 5 ou 5′ et celui de ces derniers contre la paroi interne de l'enveloppe tubulaire 1 ou 1′, par action centrifuge directe de chaque ressort sur les supports 9 ou 9′ entre lesquels il est placé. Les matelas 5 ou 5′ sont bien entendu introduits dans l'enveloppe tubulaire avant les ressorts et par exemple avec l'ensemble évoqué plus haut.

Les éventuelles déformations localisées d'enveloppe tubulaire en immersion profonde sont essentiellement absorbées par les matelas métalliques, les ressorts annulaires assurant principalement le positionnement correct des réceptacles et permettant accessoirement d'éviter la déformation de ces réceptacles rigides.

Comme indiqué plus haut, les entretoises 11 ou 11′ sont susceptibles d'être utilisées en tant que supports de circuits et/ou de composants.

Ainsi qu'illustré dans les figures 1 à 3, on peut en outre articuler une plaque support supplémentaire 16 pour circuits sur l'un au moins des réceptacles 2, la réalisation présentée dans ces figures en comportant une sur chaque réceptacle 2. Cette plaque 16 est ici assujetti sur un réceptacle 2 au niveau d'un de ses bords de manière à pouvoir passer d'une position rabattue où elle recouvre au moins partiellement la cavité 6 du réceptacle qui la porte à une position ouverte où elle permet l'accès à l'ensemble de cette cavité 6, lorsque le réceptacle est hors de l'enveloppe tubulaire 1. Les nécessaires liaisons électriques et/ou optiques des circuits de la plaque 16, s'effectuent par l'intermédiaire de classiques conducteurs électriques et/ou optiques souples, non représentés ici.

Bien entendu, bien que non illustrée, une plaque supplémentaire pour circuits, analogue à la plaque 16, pourrait être articulée sur l'un au moins des réceptacles 2′ de la réalisation présentée en figure 4.

## Revendications

1. Boîtier pour équipement submersible à circuits électriques, comportant une enveloppe tubulaire (1 ou 1′), rigide, thermiquement conductrice, fermée de manière étanche à ses extrémités et des réceptacles (2 ou 2′) pour loger des circuits électriques, ces réceptacles, rigides et thermiquement conducteurs, étant plaqués contre la paroi interne de l'enveloppe tubulaire par l'action de ressorts, de manière à permettre une dissipation de la chaleur produite par les circuits, à l'extérieur du boîtier au travers de l'enveloppe tubulaire et par l'intermédiaire des réceptacles, caractérisé en ce qu'il comporte des ressorts (8 ou 8′), de type annulaire fendu, individuellement entourés et maintenus comprimés chacun par tous les réceptacles plaqués, en réaction, contre la paroi interne de l'enveloppe tubulaire.

2. Boîtier selon la revendication 1, caractérisé en ce qu'il comporte un mince matelas (5 ou 5′) thermiquement conducteur inséré entre chaque réceptacle (2 ou 2′) et la portion de paroi interne de l'enveloppe tubulaire (1 ou 1′) contre laquelle ce réceptacle est pressé.

3. Boîtier selon au moins l'une des revendications 1 et 2, caractérisé en ce que les réceptacles (2 ou 2′) prennent appui sur les ressorts annulaires (8 ou 8′) par l'intermédiaire de supports (9 ou 9′) à dièdre venant se plaquer chacun sur la paroi externe d'un ressort annulaire par les parois internes de son dièdre à l'extérieur duquel repose au moins un réceptacle.

4. Boîtier selon la revendication 3, caractérisé en ce que les supports (9 ou 9′) plaqués sur la paroi externe d'un même ressort annulaire (8 ou 8′) sont montés sur un flasque (10 ou 10′) disposé transversalement dans l'enveloppe tubulaire, entouré par des réceptacles (2 ou 2′) et placé à côté du ressort annulaire considéré, chaque support étant apte a effectuer des déplacements transversaux limités par rapport au flasque le long duquel il coulisse.

5. Boîtier selon la revendication 4, caractérisé en ce que chaque support (9 ou 9′) est traversé par un conduit (13 ou 13′), ménagé parallèlement à l'arête du dièdre qu'il comporte, pour le passage d'une tige (12 ou 12′) venant se fixer perpendiculairement sur un flasque (10 ou 10′) de manière à positionner le support à la périphérie du ressort annulaire à côté duquel se trouve ce flasque, la section du conduit étant oblongue et orientée selon le plan médian du dièdre du support pour permettre un déplacement radial de ce support contre le flasque, dans l'enveloppe tubulaire, ladite tige (12 ou 12′) interdisant le déplacement selon son propre axe du support par rapport au flasque.

6. Boîtier, selon au moins l'une des revendications 3, 4 et 5, caractérisé en ce que chaque support (9 ou 9′) est doté d'un organe d'articulation pour deux réceptacles (2 ou 2′) montés bord à bord entre lui-même et un autre support identique, aligné avec lui et monté sur un autre flasque que le sien, lesdits deux réceptacles étant tenus au niveau d'un de leurs bords entre les organes d'articulation des supports qui les portent et basculant chacun par rotation d'une position rabattue, en appui sur l'une des parois externes des dièdres de ses deux supports, dans laquelle chacun se trouve dans l'enveloppe tubulaire, à une position ouverte, accessible hors de l'enveloppe tubulaire et donnant accès à une cavité (6 ou 6′) de logement de circuit électrique, dont le fond jouxte la paroi d'appui de ce réceptacle contre la paroi interne de l'enveloppe tubulaire.

7. Boîtier, selon la revendication 6, caractérisé en ce que l'ensemble formé par les réceptacles (2 ou 2′) montés sur leurs supports (9 ou 9′) eux-mêmes fixés sur deux flasques (10 ou 10′), est solidarisé par l'intermédiaire d'entretoises (11 ou 11′) fixées entre les flasques de l'autre côté de ceux-ci par rapport aux supports, de manière à permettre l'insertion de cet ensemble en un bloc dans l'enveloppe tubulaire (1 ou 1′) et l'insertion ultérieure des ressorts annulaires chacun par une extrémité d'enveloppe tubulaire contre un flasque et entre les supports portés par ce flasque.

8. Boîtier, selon au moins l'une des revendications 6 et 7, caractérisé en ce qu'au moins un réceptacle (2) comporte une plaque de circuit (16) articulée par un bord sur l'un des bords de ce réceptacle que jouxte sa cavité (6), ladite plaque de circuit venant au moins partiellement recouvrir ladite cavité dans une première position, rabattue, et permettant l'accès à cette cavité et à sa propre paroi correspondante, dans une seconde position, ouverte.

9. Boîtier, selon au moins l'une des revendications 1 à 8, caractérisé en ce que chaque réceptacle (2) possède une face d'appui (3) plane destinée à venir se plaquer contre une facette plane correspondante (4) de paroi interne d'enveloppe tubulaire (1) au travers d'un matelas (5).

10. Boîtier selon au moins l'une des revendications 1 à 8, caractérisé en ce que chaque réceptacle (2′) possède une face d'appui bombée (3′) destinée à venir se plaquer précisément contre une portion (4′) de paroi interne à section circulaire d'enveloppe tubulaire (1′), par l'intermédiaire d'un matelas (5′).

## Patentansprüche

1. Gehäuse für eine tauchfeste Anlage mit elektronischen Schaltungen, mit einer rohrförmigen, starren, wärmeleitenden und an ihren Enden dicht verschlossene Hülle (1 bzw. 1′), mit Behältern (2 bzw. 2′) zur Unterbringung elektrischer Schaltungen, wobei die starren und wärmeleitenden Behälter durch Federwirkung gegen die Innenwand der rohrförmigen Hülle gepreßt werden, derart, daß eine Abführung der von den Schaltungen erzeugten Wärme aus dem Gehäuse durch die rohrförmige Hülle und die Behälter ermöglicht wird, dadurch gekennzeichnet, daß das Gehäuse Federn (8 bzw. 8′) des Schlitzringtyps aufweist, die je einzeln von allen angepreßten Behältern umgeben sind, welche dadurch gegen die Innenwand der rohrförmigen Hülle angepreßt gehalten werden.

2. Gehäuse nach Anspruch 1, dadurch gekennzeichnet, daß es eine dünne, wärmeleitende Matte (5 bzw. 5′) aufweist, die zwischen jeden Behälter (2 bzw. 2′) und denjenigen Abschnitt der Innenwand der rohrförmigen Hülle (1 bzw. 1′) eingefügt ist, gegen die der betreffende Behälter angepreßt wird.

3. Gehäuse nach Anspruch 1 oder 2, dadurch gekennzeichnet, daß die Behälter (2 bzw. 2′) über Träger (9 bzw. 9′) in Form von Zweiflachs gegen die Ringfedern (8 bzw. 8′) anliegen, wobei sich die Träger mit den Innenwänden ihres Zweiflachs auf die Außenwand einer Ringfeder setzen, während auf der Außenseite des Trägers mindestens ein Behälter aufliegt.

4. Gehäuse nach Anspruch 3, dadurch gekennzeichnet, daß die auf der Außenwand einer Ringfeder (8 bzw. 8′) aufsitzenden Träger (9 bzw. 9′) an Flanschen (10 bzw. 10′) befestigt sind, die quer in der rohrförmigen Hülle angeordnet, von den Behältern (2 bzw. 2′) umgeben und neben der betrachteten Ringfeder angeordnet sind, wobei jeder Träger begrenzte Querverschiebungen relativ zu demjenigen Flansch ausführen kann, entlang dessen er gleitet.

5. Gehäuse nach Anspruch 4, dadurch gekennzeichnet, daß jeder Träger (9 bzw. 9′) von einem Kanal (13 bzw. 13′) durchzogen ist, der parallel zum First des Zweiflachs, der ihn umfaßt, für den Durchtritt eines Bolzens (12 bzw. 12′) eingearbeitet ist, der senkrecht auf einem Flansch (10 bzw. 10′) befestigt ist, derart, daß der Träger an der Peripherie des Ringfeder, an dessen Seite sich der betreffende Flansch befindet, angeordnet wird, wobei der Querschnitt des Kanals länglich ist und entlang der Mittelebene des Zweiflachs des Trägers ausgerichtet ist, um in der rohrförmigen Hülle eine radiale Verschiebung des Trägers gegen den Flansch zu ermöglichen, wobei der Bolzen (12 bzw. 12′) die Verschiebung des Trägers entlang seiner eigenen Achse relativ zum Flansch verhindert.

6. Gehäuse nach mindestens einem der Ansprüche 3, 4 und 5, dadurch gekennzeichnet, daß jeder Träger (9 bzw. 9′) mit einem Gelenkorgan für zwei Behälter (2 bzw. 2′) versehen ist, die Seite an Seite zwischen diesem Träger und einem zweiten identischen Träger montiert sind, der mit dem ersten fluchtet und auf einem anderen Flansch als der erste Träger montiert sind, wobei die beiden Behälter auf der Höhe eines ihrer Ränder zwischen den Gelenkorganen der Träger, die sie tragen, gehalten werden und jeder Behälter durch Drehung aus einer eingeklappten Position, in der er sich in der rohrförmigen Hülle befindet, wobei er sich auf einer der äußeren Wände des Zweiflachs der beiden Träger abstützt, in eine geöffnete Position gebracht werden, die außerhalb der rohrförmigen Hülle zugänglich ist und Zugang zu einer Vertiefung (6 bzw. 6′) für die Aufnahme von elektrischen Schaltungen gibt, wobei der Boden an der Wand des Behälters anliegt, die gegen die Innenwand der rohrförmigen Hülle angrenzt.

7. Gehäuse nach Anspruch 6, dadurch gekennzeichnet, daß die aus den Behältern (2 bzw. 2′) bestehende Baugruppe, die auf ihren Trägern (9 bzw. 9′) montiert ist, welche ihrerseits an zwei Flanschen (10 bzw. 10′) befestigt sind, durch Abstandshalter (11 bzw. 11′) festgelegt ist, die zwischen den Flanschen auf der anderen Seite der Abstandshalter relativ zu den Trägern fixiert sind, derart, daß die Einfügung der Baugruppe als Block in die rohrförmige Hülle (1 bzw. 1′) und die spätere Einfügung der Ringfedern möglich ist, und zwar durch je ein Ende der rohrförmigen Hülle gegen einen Flansch und zwischen die von diesem Flansch festgehaltenen Träger.

8. Gehäuse nach mindestens einem Anspruch 6 oder 7, dadurch gekennzeichnet, daß mindestens ein Behälter (2) eine Schaltungsplatte (16) aufweist, welche mit einer Kante an einer der Kanten des Behälters gelenkig gelagert ist, die gegen ihre Vertiefung (6) angrenzt, wobei die Schaltungs-platte mindestens teilweise die Vertiefung in einer ersten, heruntergeklappten Position bedeckt und in einer zweiten, offenen Position den Zugang zur Vertiefung und zu ihrer entsprechenden eigenen Wand ermöglicht.

9. Gehäuse nach mindestens einem der Ansprüche 1 bis 8, dadurch gekennzeichnet, daß jeder Behälter (2) eine ebene Anschlagseite (3) besitzt, die für das Anliegen gegen eine entsprechende ebene Fläche (4) der Innenwand der rohrförmigen Hülle (1) über eine Matte (5) bestimmt ist.

10. Gehäuse nach mindestens einem der Ansprüche 1 bis 8, dadurch gekennzeichnet, daß jeder Behälter (2′) eine gewölbte Anschlagfläche (3′) besitzt, die für das genaue Anliegen gegen einen Abschnitt (4′) der einen kreisförmigem Querschnitt aufweisenden Innenwand der rohrförmigen Hülle (1′) über eine Matte (5′) bestimmt ist.

## Claims

1. A housing for submersible equipment including electrical circuits, the housing comprising a heat conducting rigid tubular vessel (1 or 1′) closed in watertight manner at its ends, and receptacles (2 or 2′) for receiving the electrical circuits, said receptacles being rigid and heat-conducting and being pressed against the inside wall of the tubular vessel by means of springs in such a manner as to allow the heat produced by the circuits to be dissipated out from the housing via the receptacles and the tubular vessel, the housing being characterized in that it includes springs (8 or 8′) of the split annnular type each being individually surrounded and compressed by all of the receptacles which are thereby urged by reaction against the inside wall of the tubular vessel.

2. A housing according to claim 1, characterized in that it includes a thin heat-conducting cushion (5 or 5′) inserted between each receptacle (2 or 2′) and the portion of the inside wall of the tubular envelope (1 or 1′) against which said receptacle is urged.

3. A housing according to at least one of claims 1 and 2, characterized in that the receptacles (2 or 2′) bear against the annular springs (8 or 8′) via dihedral supports (9 or 9′) each of which bears against the outside wall of one of the annular springs via its own inside walls of its dihedron with the outside of each support having at least one receptacle bearing thereagainst.

4. A housing according to claim 3, characterized in that the supports (9 or 9′) pressed against the outside wall of an annular spring (8 or 8′) are mounted on a flange (10 or 10′) disposed transversely inside the tubular vessel, and surrounded by the receptacles (2 or 2′), and located at the same end of the vessel as the annular spring under consideration, with each support being suitable for performing limited transverse displacement relative to its flange, over which it slides.

5. A housing according to claim 4, characterized in that each support (9 or 9′) has a duct (13 or 13′) going therethrough, said duct running parallel to the ridge formed by the support and receiving a bolt (12 or 12′) which is fixed perpendicularly to a flange (10 or 10′) so as to position the support on the periphery of the annular spring at the same end as the flange, said duct being oblong in section with its long axis lying in the midplane passing through the ridge of the dihedron of the support enabling the support to be moved radially with respect to the flange inside the tubular vessel, with said bolt (12 or 12′) preventing it from moving axially relative to the flange.

6. A housing according to least one of claims 3, 4, or 5, characterized in that each support (9 or 9′) is provided with a hinge member for two receptacles (2 or 2′) mounted side-by-side between itself and another identical support in alignment therewith and mounted on a corresponding other flange, said two receptacles being retained at one of their edges between the hinge members of the supports which carry them, and each receptacle being capable of rotating from a folded-down position where it bears against one of the outside walls of the dihedrons of each of the two supports, which position is occupied inside the tubular vessel, and an open position which is accessible outside the tubular vessel and which gives access to the cavity (6 or 6′) receiving an electrical circuit, with the bottom of the cavity being adjacent to the wall of said receptacle which bears against the inside wall of the tubular vessel.

7. A housing according to claim 6, characterized in that the assembly constituted by the receptacles (2 or 2′) mounted on their supports (9 or 9′) themselves fixed on two flanges (10 or 10′) is held together by means of spacers (11 or 11′) fixed between the flanges and on the sides thereof opposite to the sides fixed to the supports, thereby enabling said assembly to be inserted as a unit into the tubular vessel (1 or 1′) and allowing the annular springs to be subsequently inserted, each via one end of the tubular vessel to engage a corresponding flange and to be disposed between the supports carried by said flange.

8. A housing according to at least one of claims 6 and 7, characterized in that at least one receptacle (2) includes a circuit plate (16) hinged along one edge to one of the edges of said receptacle adjacent to its cavity (6), said circuit plate at least partially covering the cavity when in a folded-down first position, and giving access to said cavity and to its own corresponding face when in an open, second position.

9. A housing according to at least one of claims 1 to 8, characterized in that each receptacle (2) includes a plane bearing face (3) for pressing against a corresponding plane facette (4) of the inside of the tubular vessel (1) via a cushion (5).

10. A housing according to at least one of claims 1 to 8, characterized in that each receptacle (2′) has a curved bearing face (3′) for pressing accurately against a curved inside wall portion (4′) of circular section in the tubular vessel (1′) via a cushion (5′).
